# EUROPEAN PATENT APPLICATION

(11) **EP 3 546 401 A1**
(43) Date of publication of application: **02.10.2019**
(21) Application number: 18167007.6
(22) Date of filing: 12.04.2018
(51) Int. Cl.: B65H 19/10, C09J 7/21, C09J 7/29

(54) **ADHESIVE TAPE FOR AUTOMATIC REEL CHANGE**

(30) Priority: 29.03.2018 WO PCT/US2018/025130
(71) Applicant: Nitto Belgium NV, 3600 Genk (BE); Nitto, Inc., Teaneck, NJ 07666 (US)
(72) Inventor: PLESSERS, Senne, Red Bank, NJ New Jersey 07701 (US); JACOBS, Dirk, 3620 Lanaken (BE); DASSEN, Ronny, 3730 Hoeselt (BE); AWOUTERS, Erwin, 3530 Houthalen (BE)
(74) Representative: Grünecker Patent- und Rechtsanwälte PartG mbB

(57) **Abstract**

An adhesive tape (1, 1', 1'', 1''', 1'''') is described for an automatic reel change from a first reel to a second reel in the paper and printing industry or the like which comprises a splittable carrier (9, 9', 9'', 9''', 9'''') which is coated on one side with an adhesive layer (4) and on the other side with a bonding layer (12) and to a method for producing such an adhesive tape. It is the object of the present invention to provide an adhesive tape for automatic reel change from a first reel to a second reel which ensures a reliable splicing of the two reels and which minimizes tension variations during splicing. In order to solve this objective, the splittable carrier (9, 9', 9'', 9''', 9'''') of the adhesive tape (1, 1', 1'', 1''', 1'''') according to the present invention is in parts pre-opened.

## Description

The present patent application refers to an adhesive tape for automatic reel change from a first reel to a second reel in the paper and printing industry or the like which comprises at least one splittable carrier which is coated on one side with an adhesive layer and on the other side with a bonding layer and to a method for producing such a tape.

In the web processing industry, for example the paper and printing industry, it is very important to have continuous production and it is a high priority to avoid long interruptions in production in order to avoid an increase of costs. It is therefore cost-saving to replace an almost fully discharged reel of web material, such as paper, with a new reel without the need to stop the machines which run at high speed. Such an automatic reel change from a first reel to a second reel without stopping the continuous production is also known as flying splice application or flying reel change.

The automatic reel change is done using double-sided self-adhesive tapes, known as splice tapes. The splice tapes known from the state of the art usually comprise a splittable carrier which is coated on both sides with an adhesive layer. At least one of the adhesive layers is covered with the first side of a liner. The splice tapes are usually wound up on a roll so that the other adhesive layer comes to lie on the second side of the liner. The liner can comprise a cut in the longitudinal direction of the splice tape which divides the liner in two parts. The cut can be arranged off-center, so that the width of one of the parts of the liner is larger than the width of the other part of the liner. The splice tapes must be of high adhesion and high tack but should also be of a water-soluble self-adhesive composition and comprise a water-soluble or repulpable backing so as not to interfere with the re-use of paper waste in the paper making machine.

Such a splice tape is for example known from US Patent No. 5,916,651. This patent shows an adhesive tape for an automatic reel change with a butted splice in paper finishing machines, printing machines or the like. The adhesive tape comprises a paper backing which is made of a splittable paper and which is coated on both sides with a water soluble self-adhesive composition. One side of the paper backing with the coating of self-adhesive composition is covered by a liner.

In the products and processes used up to now, several steps need to be done to assure a secure bonding mechanism of a first or old reel with a second or new reel during the flying reel change. In a first step the splicing tape is applied with pressure underneath the first winding of the new reel. Then, one part of the liner, usually the smaller part, is removed and the first winding of the new reel is attached to the adhesive coating of the splice tape to fix the first winding of the new reel to the second winding of the new reel. Pressure is applied to the first winding to increase the bonding strength. After that, excess material from the first winding of the new reel is removed at the point where the other part of the liner begins, in order to free the splice tape. Then the second part of the liner of the splice tape is removed and the new reel is brought to the same speed as the old reel. When the new reel has reached the same speed as the old reel, the new reel and the old reel are brought into contact. The adhesive coating of the splice tape will bond the web material of the new reel and the web material of the old reel together. Due to the pulling force exerted by the web material of the old reel onto the web material of the new reel, the splittable carrier will split open and the web material of the new reel will enter into the machine, ensuring continuous production. When the splittable carrier splits open, it opens along a splitting plane which is parallel to a plane defined by the longitudinal direction and the width direction of the splice tape. One part of the splittable carrier will remain on the web material of the old reel and cover the adhesive coating which sticks to the web material of the old reel, and the other part of the splittable carrier will remain on the web material of the new reel and cover the adhesive coating which sticks to the web material of the new reel.

Today, web processing companies are under pressure to find ways to decrease costs and to increase profitability by improving the performance of their processes. However, changing the production environment in any way puts more pressure on the flying splice tape. A reliable splice tape which ensures a secure splicing of the two reels is essential for web processing. Tension variations during the splicing process should be avoided.

It is therefore the object of the present invention to provide an adhesive tape for automatic reel change from a first reel to a second reel which ensures a reliable splicing of the two reels and which minimizes tension variations during splicing.

In order to achieve this objective, the splittable carrier of the adhesive tape according to the present invention is in parts pre-opened.

In the context of the present invention, pre-opened means that on at least one side of the splittable carrier, the adhesive layer together with the material of the splittable carrier which adheres to this adhesive layer has been removed. In these pre-opened parts, the splittable carrier has been split open along the splitting plane as defined above. Therefore, in the pre-opened parts, one part of the splittable carrier has been removed and the remaining part of the splittable carrier still adheres to the bonding layer. Thus, in the pre-opened parts of the splittable carrier, the surface of the carrier facing to the outside has a certain roughness and the appearance of a fractured surface. As the splittable carrier is in parts pre-opened, the opening force required for opening the splittable carrier in application, can be controlled by changing the size of the pre-opened splittable part. Further, the pre-opened parts of the splittable carrier also cause a reduction in peak force, which leads to less tension variations during the splicing process.

In a preferred embodiment of the invention, the thickness of the pre-opened parts of the splittable carrier is smaller than the original thickness of the splittable carrier. The original thickness is the thickness of the splittable carrier when it is not pre-opened. In the pre-opened parts, the carrier has been opened along the splitting plane as defined above. The differences in thickness between the pre-opened parts and the original thickness of the splittable carrier in the parts which have not been pre-opened is larger than the thickness variations in the splittable carrier which may occur during production.

Preferably, the thickness of the pre-opened parts of the splittable carrier is about one half of the original thickness of the splittable carrier. This is the case when the splitting plane is arranged approximately in the middle of the thickness of the splittable carrier. When the splittable carrier is split, each part of the splittable carrier covering the adhesive layer and the bonding layer then has approximately the same thickness and offers good protection so that the adhesive layers will not cause problems during the following production process in the processing machines.

In another preferred embodiment of the invention, the adhesive tape may further comprise a splicing carrier which is coated with an adhesive coating on one side and attached to the bonding layer of the splittable carrier on the other side. The splicing carrier increases the stability and the robustness of the adhesive tape. The tape can thus be used in more demanding environments with increased tension, increased humidity and/or increased temperature.

The splicing carrier may be made of a paper or film material, preferably a film material. Examples for the film material can be aluminized material, black PET, aluminized PET, PO, PTFE, paper, all aluminized or not. The use of a film material increases the stability of the splicing carrier. Problems with the stability of the adhesive tape related to migration of plasticizers, which have a dimeric effect on the splice performance of the adhesive tape, are avoided. The shelf life of the adhesive tape can be improved.

In a further preferred embodiment, the film material is a water-soluble film material. The water-soluble film improves stability while nevertheless allowing repulpability.

In still a further embodiment at least one of the adhesive layers or the bonding layer of the splittable carrier and/or the adhesive coating of the splicing carrier is covered by a liner. This liner protects the adhesive layer before use and ensures that the adhesive layer does not unintentionally stick to any other materials.

Furthermore, the liner can comprise a cut in its longitudinal direction. The cut extends through the complete thickness of the liner and divides the liner in two parts. Each of the two parts can be removed separately. During the use of the adhesive tape, the first part of the liner is removed to fix the beginning of the second or new reel to the adhesive tape, then the second part of the liner is removed to fix the end of the first or old reel to the adhesive tape. The second part remains covered until it is needed, so that it does not stick to other materials.

It is also possible that the splittable carrier is pre-opened along a first longitudinal edge. The pre-opened parts are then arranged at or adjacent to the first longitudinal edge. In use, the adhesive tape is fixed to the first and second reel perpendicular to the longitudinal direction of the web material of the reels. The first longitudinal edge of the adhesive tape is the edge facing in the direction of the second reel. The opening force can be adjusted by choosing an appropriate size of the pre-opened part. In a preferred embodiment a stripe of the splittable carrier in the longitudinal direction of the adhesive tape is removed. This allows an easy production of the pre-opened part. The width of the pre-opened part is preferably smaller than 40mm. In any case, the width of the pre-opened part should be no more than the half of the width of the final product.

In still a further embodiment, the splittable carrier is also pre-opened along a second longitudinal edge. As already described above, in use the adhesive tape is fixed to the first and second reel perpendicular to the longitudinal direction of the web material of the reels. The second longitudinal edge of the adhesive tape is the edge facing in the direction of the first reel. When the splittable carrier is also pre-opened at its second longitudinal edge a further reduction of the opening force is achieved. Furthermore, the pre-opened part of the splittable carrier at the second longitudinal edge results in a smooth opening of the splittable carrier during the splicing process. Preferably the width of the pre-opened part along the second longitudinal edge is smaller than 40mm. In any case, the width of the pre-opened part should be no more than the half of the width of the final product.

According to still another embodiment, the splittable carrier has the same width as the splicing carrier. Therefore, the splittable carrier covers the full backside of the splicing tape leading to an increased stability and robustness. Additionally, as there are no thickness variations on the backside of the splicing carrier this will also lead to a reduction of tension variations.

In another embodiment, the adhesive tape may comprise at least two splittable carriers which are each coated on one side with an adhesive layer and on the other side with a bonding layer and are attached to one side of the splicing carrier so that a gap with a gap width of less than 3 mm is formed between the two splittable carriers. Therefore, the total width of the two splittable carriers which are arranged adjacent each other corresponds approximately to the width of the splicing carrier. This leads to an adhesive tape with a further reduced opening force and yet an increased stability, as there is less chance that the splittable carrier will open when the second reel is sped up to match the speed of the first reel. By using a filmic splicing carrier, an increase in stability is noticed especially when a watersoluble/repulpable film is used to make a fully repulpable/watersoluble flying splice product. Such an adhesive tape with a gap between the two splittable carrier stripes can also be realized by using a single splittable carrier which is coated on one side with an adhesive layer and on the other side with a bonding layer and which is attached to one side of the splicing carrier, wherein a gap with a gap width of less than 3 mm is cut out from the splittable carrier and the adhesive layer that is contacting the splittable carrier.

In still another embodiment, the adhesive tape may comprise one splittable carrier which is coated on one side with an adhesive layer and on the other side with a bonding layer and is attached to one side of the splicing carrier, wherein a third pre-opened part is created by making two cuts through the adhesive layer and halfway through the splittable carrier so as to yield a central strip and then removing the strip. The third pre-opened part of the splittable carrier leads to a further reduction of the opening force. Other production methods for the third pre-opened part are possible.

It is also possible that the total width of the splittable carrier(s) is smaller than the width of the splicing carrier. This leads to a further reduction of the opening force.

Furthermore the adhesive tape can be provided with short cuts (notches) at the first and/or second edges of the tape in a manner that is perpendicular to its longitudinal direction. These cuts can be quite small and allow an operator to tear the adhesive tape by hand as needed, especially when the splicing carrier comprises a film material. Due to the cuts, the use of a knife for working with the adhesive tape is no longer necessary and overall safety is improved.

In still a further embodiment, the splittable carrier is laminated with a detectable layer. This detectable layer allows an easy detection of the adhesive tape when it is attached to the second reel of web material. It would also be possible that the splittable carrier is deposited with the detectable layer. The detectable layer is then deposited on the splittable carrier, which is preferably a paper carrier. The splittable carrier (paper carrier) must not be impregnated with a detectable material.

In still another embodiment, the splicing carrier can be used as a detectable layer. This is possible if the splicing carrier is made, for example, of aluminized PET or aluminum.

Furthermore, it may be possible that the detectable layer provides the tensile strength needed to work in the application. The detectable layer has a certain tensile strength wich ensures that the adhesive tape does not tear during the splicing process. The tensile strength of the detectable layer is preferably in between 10 and 150 N/20mm, more preferably in between 30 and 100N/20 mm, and most preferably in between 25 and 70 N/20mm.

The present invention also relates to a method for producing an adhesive tape as described above comprising the following steps:
- Providing a first tape comprising at least one splittable carrier which is coated on one side with an adhesive layer and on the other side with a bonding layer, wherein at least one of the adhesive layer and/or the bonding layer is covered with a protective layer,
- Cutting the protective layer, the adhesive layer contacting the protective layer, and the splittable carrier to a specific depth to produce cutout parts, and
- Removing the cutout parts of the splittable carrier, the adhesive layer and the protective layer, thereby producing a splittable carrier which is in parts pre-opened.

The splittable carrier is a carrier with a certain thickness that can be split up along the splitting plane in two carrier parts having the same area as the original carrier but a smaller thickness. The process of splitting up the splittable carrier is also called opening the carrier. The term "specific depth" as mentioned above is the sum of the thickness of the protective layer, the thickness of the adhesive layer contacting the protective layer, and the thickness of the parts of the splittable carrier which should be removed. The thickness of the parts of the splittable carrier which should be removed can for example be approximately half of the thickness of the splittable carrier before splitting. Rotary die cutters can be used for cutting the first tape. As the size of the cutout parts of the splittable carrier can be changed by changing the position of the rotary die cutters, it is possible to produce adhesive tapes having different opening forces from the same starting product. This leads to positive effect on stock, as only one product, the first tape, needs to be stored to produce adhesive tapes with different opening forces. In other conventional concepts, several splittable carriers having different widths must be stored to produce adhesive tapes with different opening forces.

The method according to the invention can further comprise the following steps:
- Providing a second tape comprising a splicing carrier which is coated on one side with an adhesive coating, the adhesive coating being covered by a liner,
- Laminating the first tape and the second tape so that the side of the splicing carrier which is not covered with the adhesive coating is attached to the bonding layer of the first tape. In embodiments where the splicing carrier comprises a film material and the adhesives used are repulpable, this leads to an end product with a further enhanced stability which can be used in environments with more demanding conditions, for example with increased humidity, increased temperature and/or increased tension.

The method may further comprise a step in which the liner of the second tape is cut in the longitudinal direction. This cutting step is preferably performed before the lamination of the first tape and the second tape. The cutting can be done by kiss cutting. The liner is preferably cut through its entire thickness. This allows a user to remove the two parts of the liner of the second tape independently of each other.

In a further variant of the method, the protective layer of the first tape can be removed from the cutout parts of the first tape, then a removal carrier can be laminated to the cutout parts of the first tape, and the removal carrier with the cutout parts of the first tape laminated onto the removal carrier can be removed from the first tape. This is an easy way to produce the pre-opened parts of the splittable carrier. The removal carrier must be of a material which has an adherence to the adhesive coating of the splittable carrier that is higher than the opening force of the splittable carrier.

In the following, the invention is described in more detail with the aid of drawings.
Figure 1 shows a top view of the adhesive tape,
Figure 2 shows a bottom view of the adhesive tape,
Figure 3 shows a side view of the adhesive tape in the direction of arrow III in Figure 1,
Figure 4 shows a side view of the adhesive tape in the direction of arrow IV in Figure 1,
Figures 5a and 5b show a second and a third embodiment of an adhesive tape,
Figure 6 shows a fourth embodiment of an adhesive tape,
Figure 7 shows a fifth embodiment of an adhesive tape,
Figures 8a - 8c show the splicing process of connecting the end of a first reel to the beginning of a second reel using the adhesive tape shown in Figures 1-4,
Figure 9 shows the production process of an adhesive tape, and
Figure 10 shows an embodiment of a rotary die cutter that may be used in the process of Figure 9 wherein the design, width, and depth of the blades is customizable.

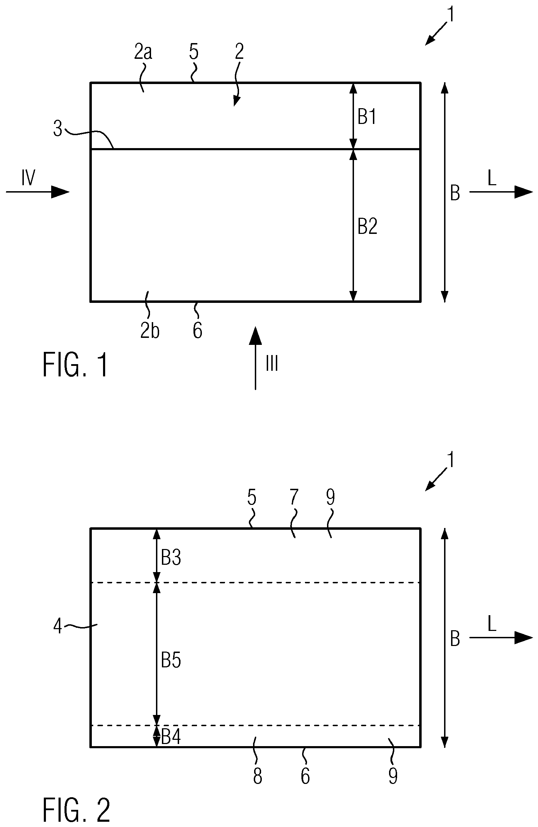

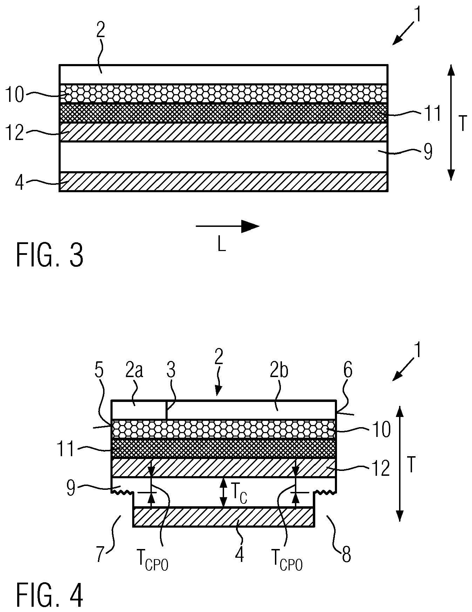

Figures 1 to 4 show the structure of an adhesive tape 1 according to the present invention. Figure 1 is a top view of the adhesive tape 1. The adhesive tape 1 has a width B and extends in the longitudinal direction L. The adhesive tape 1 has a first longitudinal edge 5 and a second longitudinal edge 6. Figures 1 and 2 show only a part of the adhesive tape 1, the adhesive tape 1 normally has a greater length. The adhesive tape 1 is composed of several layers which will be described in detail with the aid of Figures 3 and 4. In Figure 1 only the topmost layer of the adhesive tape 1, which is a liner 2, is visible. The liner 2 comprises a cut 3 along the longitudinal direction L. The cut 3 divides the liner 2 in a first liner part 2a and a second liner part 2b. The cut 3 is arranged off-centered, so that the width B1of the first liner part 2a is smaller than the width B2 of the second liner part 2b. The side of the adhesive tape 1 shown in Figure 1 is the side of the adhesive tape 1 which is fixed to the end of a first reel and the beginning of a second new reel when the adhesive tape 1 is used for an automatic reel change.

Figure 2 is a bottom view of the adhesive tape 1. This is the side of the adhesive tape 1 which is used to fix the beginning of the second reel to the second winding of the second reel when in use. At the bottom, the adhesive tape 1 comprises an adhesive layer 4. At the first longitudinal edge 5 of the adhesive tape 1, a first pre-opened part 7 of a splittable carrier 9 is visible. The first longitudinal edge 5 is the edge of the adhesive tape 1 which faces towards the second or new reel when the adhesive tape 1 is used for an automatic reel change. The first pre-opened part 7 has the form of a stripe extending over the complete length of the adhesive tape 1 and has a width B3. The width B3 of the first pre-opened part 7 is smaller than approximately 40mm. At the second longitudinal edge 6 of the adhesive tape 1, a second pre-opened part 8 of the splittable carrier 9 is visible. The second longitudinal edge 6 of the adhesive tape 1 is the edge facing the first or old reel when the adhesive tape 1 is used for an automatic reel change. The second pre-opened part 8 also has the form of a stripe extending over the complete length of the adhesive tape 1 and has a width B4. The width B4 of the second pre-opened part 8 is preferably smaller than 40mm. The provision of the pre-opened part 8 allows a smooth opening during the reel change. In the middle of the adhesive tape 1, the splittable carrier 9 is not opened and is still covered by the adhesive layer 4. The unopened part of the splittable carrier 9 has a width B5.

Figure 3 shows the adhesive tape 1 in a side view in the direction of arrow III in Figure 1. This is a side view in the longitudinal direction L of the adhesive tape 1. As already mentioned, the adhesive tape 1 comprises a liner 2 as topmost layer. Underneath the liner 2 an adhesive coating 10 is arranged which is coated to one side of a splicing carrier 11. The splicing carrier 11 is connected with the splittable carrier 9 via a bonding layer 12. The bonding layer 12 may comprise any type of material that connects or bonds one layer to another layer, but preferably comprises an adhesive. On the side facing away from the splicing carrier 11, the splittable carrier 9 is coated with the adhesive layer 4. The splittable carrier 9 is thus coated on one side with the bonding layer 12 and on the other side with the adhesive layer 4. The splicing carrier 11 can be made of a film material, for example a water-soluble film, or a paper material, for example printed paper. The adhesive layer 4, the bonding layer 12, and the adhesive coating 10 can be made of a solvent based or a repulpable based adhesive. The repulpable adhesive is needed to ensure repulpabilty when needed in the applications, for example in the production of paper.

The adhesive tape does not necessarily need to comprise the splicing carrier 11 and the adhesive coating 10 of the splicing carrier. It would also be possible to fix the liner directly to the bonding layer 12 of the splittable carrier 9. In this case, the splittable carrier must provide the necessary tensile strength for the adhesive tape. Furthermore, the bonding layer 12 must then allow a secured attachment of the splittable carrier 12 to the beginning of the second or new reel and the end of the first or old reel. The adhesive tape may further comprise a detectable layer. The detectable layer can be designed to provide the tensile strength which is necessary for the application. In some embodiments, the tensile strength of the detectable layer is preferably in between 10 and 150 N/20mm, more preferably in between 30 and 100 N/20mm and most preferably in between 25 and 70 N/20mm. In this case, the detectable layer ensures that the adhesive tape is not damaged during the splicing process. This detectable layer is not shown in the figures. However, the splicing carrier could be the detectable layer if made of an appropriate material.

Figure 4 shows the adhesive tape 1 in a side view in the direction of arrow IV of Figure 1. This is a side view perpendicular to the longitudinal direction L of the adhesive tape 1. As already described, the liner 2 comprises the cut 3 in the longitudinal direction L which divides the liner 2 in the first liner part 2a and the second liner part 2b. The liner 2 covers the adhesive coating 10 of the splicing carrier 11. The other side of the splicing carrier 11 is connected to the splittable carrier 9 by the bonding layer 12. The splittable carrier 9 covers the full backside of the splicing carrier 11. On the other side, the splittable carrier 9 is coated with the adhesive layer 4. The bonding layer 12 and the adhesive layer 4 can be made of the same material.

As can be clearly seen in Figure 4, the splittable carrier 9 is pre-opened. At the first longitudinal edge 5 and the second longitudinal edge 6, parts of the adhesive layer 4 and parts of the splittable carrier 9 are removed so that the first pre-opened part 7 and the second pre-opened part 8 are produced. In the middle part between the first pre-opened part 7 and the second pre-opened part 8, the splittable carrier 9 is not opened. The thickness T_{CPO} of the splittable carrier 9 in the regions of the first pre-opened part 7 and the second pre-opened part 8 is smaller than the thickness T_{C} of the splittable carrier 9 in the remaining regions of the splittable carrier 9. By partly opening the splittable carrier 9 the opening force is reduced so that the splitting of the splittable carrier 9 will result in less tension variations. The opening force can be easily controlled by varying the amount of pre-opened splittable carrier 9, wherein an increase in the amount of pre-opened splittable carrier is directly correlated with a reduction in the peak opening force. If a larger area of the splittable carrier 9 is opened, that means, if the size of the pre-opened parts 7, 8 is increased, the opening force is reduced to a greater extent. However, it would also be sufficient if the splittable carrier is pre-opened only along one of its longitudinal edges (not shown in the figures).

The overall thickness T of the adhesive tape 1, before use, is between 150 µm and 350 µm, more preferably in between 150 µm and 280 µm. The width B of the adhesive tape 1 is preferably in between 10 mm and 100 mm, more preferably in between 25 mm and 80 mm.

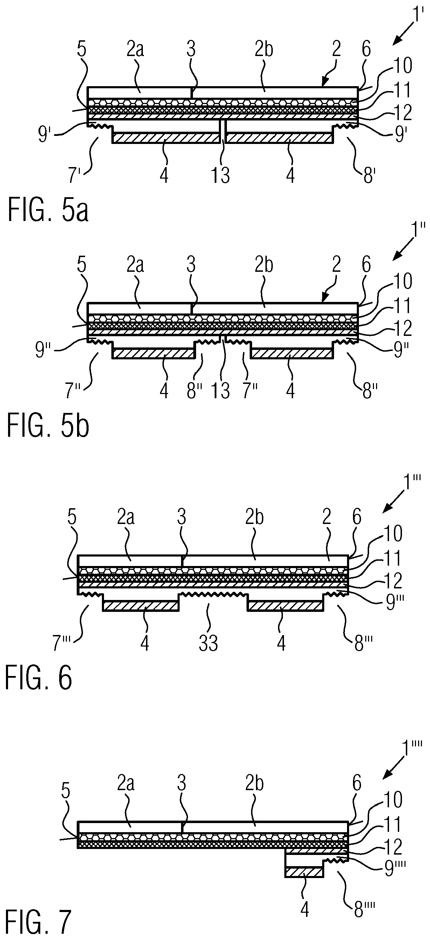

Figure 5a shows another embodiment of an adhesive tape 1'. The adhesive tape 1' has basically the same structure as the adhesive tape 1 described in connection with Figures 1 to 4. The same references numbers are used for identical parts. However, a gap 13 is cut from the adhesive layer 4 and the splittable carrier 9'. Alternatively, two splittable carriers 9' are arranged in parallel to each other on the backside of the splicing carrier 11 via a bonding layer 12 so that a gap 13 extending in the longitudinal direction of the adhesive tape 1' is created between the two splittable carriers 9'. In this case the bonding layer extends only along each of the two splittable carriers and is not provided in the gap (not shown in fig. 5a). The width of the gap 13 is less than 3 mm, so that the two splittable carriers 9' cover approximately the complete backside of the splicing carrier 11. Each of the splittable carriers 9' comprises one pre-opened part 7' or 8' adjacent to one of the longitudinal edges 5, 6 of the adhesive tape 1'.

In Figure 5b a third embodiment of an adhesive tape 1" is shown. In this embodiment, two splittable carriers 9" are attached to the backside of the splicing carrier 11 via a bonding layer 12, wherein the two splittable carriers 9" are arranged in parallel to each other so that a gap 13 extending in the longitudinal direction of the adhesive tape 1" is formed between the two splittable carriers 9". As already mentioned in connection with Figure 5a, the gap 13 can be formed by placing two splittable carriers 9" adjacent to each other or by cutting a middle part out of the one single splittable carrier 9" and the adhesive layer 4 attached thereto. The width of the gap 13 is smaller than 3 mm, so that the splittable carrier(s) 9" cover approximately the complete backside of the splicing carrier 11. Both splittable carriers 9" are provided with two pre-opened parts 7", 8", one pre-opened part on each longitudinal edge of the splittable carriers 9". This leads to pre-opened parts of the splittable carrier in the middle of the adhesive tape.

The adhesive tape may also comprise a central pre-opened part. Figure 6 shows such a fourth embodiment of an adhesive tape 1'''. The adhesive tape 1''' comprises a liner 2 with two liner parts 2a, 2b which cover the adhesive coating 10 of the splicing carrier 11. One splittable carrier 9''', which is provided with pre-opened parts 7''', 8''' adjacent to at least one of the longitudinal edges of the splittable carrier 9''', is attached to the backside of the splicing carrier 11 via a bonding layer 12, and additionally two cuts are made in between the first longitudinal edge 5 and the second longitudinal edge 6, through the adhesive layer 4 and about halfway through the splittable carrier 9''', so as to yield a central strip that once removed gives a third pre-opened part 33 in the center.

Figure 7 shows a fifth embodiment of an adhesive tape 1''''. The adhesive tape 1'''' has mainly the same structure as the adhesive tapes described above. However, the splittable carrier 9'''' has a smaller width than the splicing carrier 11 and therefore does not cover the complete backside of the splicing carrier 11 but is arranged on the edge of the splicing carrier 11 at the second longitudinal edge 6. The splittable carrier 9'''' comprises one pre-opened part 8'''' which extends along the second longitudinal edge 6 of the adhesive tape 1''''. The splittable carrier may further comprise a second pre-opened part which extends along the first longitudinal edge of the adhesive tape (not shown in Figure 7).

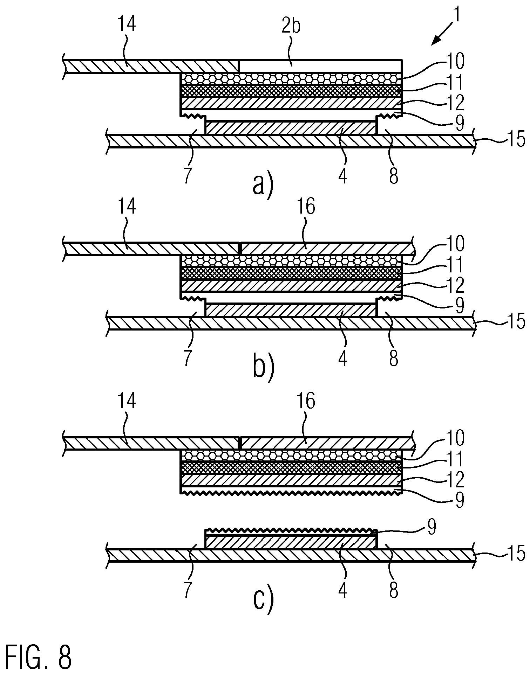

Figures 8a to 8c show an automatic reel change from a first reel to a second reel using an adhesive tape 1 according to Figures 1 to 4. In the first step, the adhesive tape 1 is attached to the second winding 15 of the web material of the second reel with the adhesive layer 4 of the splittable carrier 9. The first liner part 2a is removed and the beginning 14 of the web material of the second reel is attached to the adhesive coating 10 of the splicing carrier 11. This is done to fix the beginning 14 of the web material of the second reel to the second winding 15 of the second reel, thereby allowing a user to store the second reel until it is ready to use in a flying splice application or flying reel change.

After that, the second liner part 2b of the adhesive tape 1 is removed. The second reel is then brought to the same speed as the first reel and both reels are pressed together so that the end 16 of the web material of the first reel is attached to the adhesive coating 10 of the splicing carrier 11 (see Fig. 8b). The web material of the first reel is now connected to the web material of the second reel via the adhesive tape 1, especially the splicing carrier 11. The end 16 of the web material of the first reel then pulls on the beginning 14 of the web material of the second reel. This produces a pulling force in the splittable carrier 9 and the splittable carrier 9 is split open along the splitting plane. This is shown in Figure 8c. One part of the splittable carrier 9 remains on the second winding 15 of the second reel and covers the adhesive layer 4. The other part of the splittable carrier 9 remains on the splicing carrier 11 and covers the bonding layer 12. The splittable carrier 9 extends over the complete length of the adhesive tape 1 so that no variations in the thickness of the splice are formed.

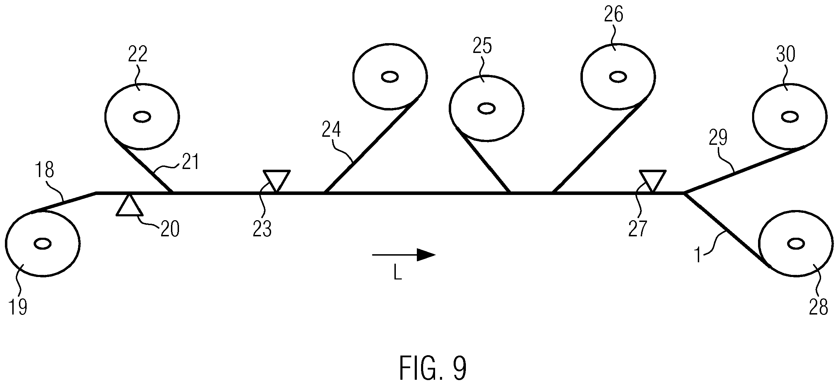

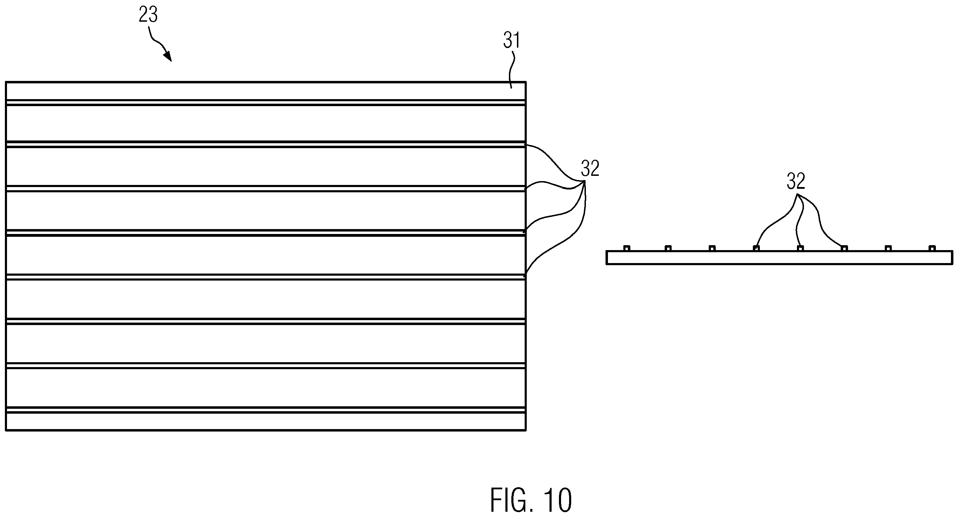

In the following, a process for producing the adhesive tape 1, 1', 1", 1''' and 1'''' as described above is described with the aid of Figures 9 and 10.

In a first step, a second tape 18 which comprises the splicing carrier which is covered on one side with the adhesive coating and the liner is provided on a second roll 19. The second roll preferably has a width that is greater than the width of the finished product (the adhesive tape 1, 1', 1", 1''', 1'''') so that the second roll can be cut into a plurality of finished products. The splicing carrier with the adhesive coating and the liner is unwound from the second roll 19. The liner is then cut in the longitudinal direction L of the second tape 18 with a second cutter 20 to produce a one or more cuts in the liner. Each cut extends in the longitudinal direction of the second tape 18. The cutter 20 can be a kiss cutter. The position of each blade of the cutter 20 which produces the cut(s) will be determined based on the width of the final adhesive tape.

After that, a first tape 21 having the same or wider width as the second tape 18 and comprising the splittable carrier which is coated on one side with an adhesive layer and on the other side with a bonding layer is provided. The adhesive layer is coated with a single protective layer. After that, the second tape 18 and the first tape 21 are laminated together so that the bonding layer of the first tape 21 adheres to the splicing carrier of the second tape 18. With the aid of a first cutter 23, cuts of a specific depth are produced in the first tape 21, cutting the protective layer, the adhesive layer contacting the protective layer, and a part of the splittable carrier. The depth of the cuts is preferably the sum of the thickness of the protective layer, the thickness of the adhesive layer and half of the thickness of the splittable carrier.

The protective layer is cut into cutout parts 24 of the protective layer and the remaining protective layer 29. Preferably, rotary die cutters as shown in Figure 10 are used for cutting. After the cutting step, the cutout parts 24 of the protective layer are removed from the adhesive layer of the first tape 21, and a removal carrier 25 is fixedly connected to the adhesive layer of the splittable carrier in the cutout parts where the protective layer has been removed. After that, the removal carrier 25 is pulled away from the splittable carrier and wound up on a third roll 26, thereby removing the cutout parts of the splittable carrier. The adhesive tape is then cut into a plurality of finished adhesive tapes in the requested width using a third cutter 27. Then, the remaining protective layer 29 is removed from the parts of the splittable carrier which have not been opened and is wound up on a fourth roll 30. The finished adhesive tapes comprising the splicing carrier, which is coated on one side with the adhesive coating and the liner, and which is connected on its other side to the splittable carrier, which is coated on one side with the adhesive layer and on the other side with the bonding layer, are then rewound on a plurality of third rolls 28.

If the adhesive tape does not need to comprise the splicing carrier, then the step comprising laminating the second tape 18 is not necessary, although a liner may be laminated to the first tape 21 on the side that is not coated with the protective layer.

Figure 10 shows an embodiment of a first cutter 23 for producing the cutout parts of the first tape 21. In this embodiment, the first cutter 23 comprises a roll 31 with a specific width corresponding to the width of the first and second tapes. Eight cutter blades 32 are arranged on the roll 31. This means that seven rolls of the finished adhesive tape 1, 1', 1", 1''', 1'''' can be produced with the cutter 23, because the adhesive tape will be cut in the middle of each of the pre-opened parts of the splittable carrier. The cutter blades 32 have a depth corresponding to the sum of the thickness of the protective layer, the thickness of the adhesive layer and half of the thickness of the splittable carrier. This will ensure a clean cut without cutting completely through the first tape 21.

Unless otherwise indicated, all numbers expressing quantities of ingredients, properties such as molecular weight, reaction conditions, and so forth used in the specification and claims are to be understood as being modified in all instances by the term "about." Accordingly, unless indicated to the contrary, the numerical parameters set forth in the specification and attached claims are approximations that may vary depending upon the desired properties sought to be obtained. At the very least, and not as an attempt to limit the application of the doctrine of equivalents to the scope of the claims, each numerical parameter should at least be construed in light of the number of reported significant digits and by applying ordinary rounding techniques.

The terms "a," "an," "the" and similar referents used in the context of describing the invention (especially in the context of the following claims) are to be construed to cover both the singular and the plural, unless otherwise indicated herein or clearly contradicted by context. All methods described herein can be performed in any suitable order unless otherwise indicated herein or otherwise clearly contradicted by context. The use of any and all examples, or exemplary language (e.g., "such as") provided herein is intended merely to better illuminate the invention and does not pose a limitation on the scope of any claim. No language in the specification should be construed as indicating any non-claimed element essential to the practice of the invention.

Groupings of alternative elements or embodiments disclosed herein are not to be construed as limitations. Each group member may be referred to and claimed individually or in any combination with other members of the group or other elements found herein. It is anticipated that one or more members of a group may be included in, or deleted from, a group for reasons of convenience and/or patentability. When any such inclusion or deletion occurs, the specification is deemed to contain the group as modified thus fulfilling the written description of all Markush groups used in the appended claims.

Certain embodiments are described herein, including the best mode known to the inventors for carrying out the invention. Of course, variations on these described embodiments will become apparent to those of ordinary skill in the art upon reading the foregoing description. The inventor expects skilled artisans to employ such variations as appropriate, and the inventors intend for the invention to be practiced otherwise than specifically described herein. Accordingly, the claims include all modifications and equivalents of the subject matter recited in the claims as permitted by applicable law. Moreover, any combination of the above-described elements in all possible variations thereof is contemplated unless otherwise indicated herein or otherwise clearly contradicted by context.

In closing, it is to be understood that the embodiments disclosed herein are illustrative of the principles of the claims. Other modifications that may be employed are within the scope of the claims. Thus, by way of example, but not of limitation, alternative embodiments may be utilized in accordance with the teachings herein. Accordingly, the claims are not limited to embodiments precisely as shown and described.

### List of reference signs

- 1, 1', 1", 1'" 1"": adhesive tape
- 2: liner
- 2a: first liner part
- 2b: second liner part
- 3: cut
- 4: adhesive layer
- 5: first longitudinal edge
- 6: second longitudinal edge
- 7, 7', 7", 7'": first pre-opened part
- 8, 8', 8", 8"', 8"": second pre-opened part
- 9, 9', 9", 9"', 9"": splittable carrier
- 10: adhesive coating
- 11: splicing carrier
- 12: bonding layer
- 13: gap
- 14: beginning of second reel
- 15: second winding of second reel
- 16: end of first reel
- 18: second tape
- 19: second roll
- 20: second cutter
- 21: first tape
- 22: first roll
- 23: first cutter
- 24: cutout parts of the protective layer
- 25: removal carrier
- 26: roll of removal carrier
- 27: third cutter
- 28: third roll
- 29: remaining protective layer
- 30: fourth roll
- 31: roll
- 32: cutter blade
- 33: third pre-opened part

- L: longitudinal direction
- B: width of adhesive tape
- B1: width of first liner part
- B2: width of second liner part
- B3: width of first pre-opened part
- B4: width of second pre-opened part
- B5: width of the not opened part of the splittable carrier
- T: thickness of adhesive tape
- T_{C}: thickness of splittable carrier
- T_{CPO}: thickness of the splittable carrier in the pre-opened parts

## Claims

1. Adhesive tape (1; 1'; 1"; 1'''; 1'''') for automatic reel change from a first reel to a second reel comprising at least one splittable carrier (9; 9'; 9"; 9'''; 9'''') which is coated on one side with an adhesive layer (4) and on the other side with a bonding layer (12), **characterized in that** the splittable carrier (9; 9'; 9"; 9'''; 9'''') is in parts (7, 8; 7', 8'; 7", 8"; 7''', 8'''; 8""; 33) pre-opened.

2. Adhesive tape (1; 1'; 1"; 1'''; 1'''') according to claim 1, **characterized in that** the thickness (T_{CPO}) of the pre-opened parts (7, 8; 7', 8'; 7", 8"; 7''', 8'''; 8""; 33) of the splittable carrier (9; 9'; 9"; 9'''; 9"") is smaller than the original thickness (Tc) of the splittable carrier (9; 9'; 9"; 9'''; 9"").

3. Adhesive tape (1; 1'; 1"; 1'''; 1'''') according to claim 1 or 2, **characterized in that** the thickness (T_{CPO}) of the pre-opened parts (7, 8; 7', 8'; 7", 8"; 7''', 8'''; 8""; 33) of the splittable carrier (9; 9'; 9"; 9'''; 9"") corresponds to approximately one half of the original thickness (Tc) of the splittable carrier (9; 9'; 9"; 9'''; 9"").

4. Adhesive tape (1; 1'; 1"; 1''') according to one of claims 1 to 3, further comprising a splicing carrier (11) which is coated with an adhesive coating (10) on one side and attached to the bonding layer (12) of the splittable carrier (9; 9'; 9"; 9'''; 9"") on the other side.

5. Adhesive tape (1; 1'; 1"; 1'''; 1'''') according to claim 4, **characterized in that** the splicing carrier (11) is made of a film material, preferably **characterized in that** the film material is a water-soluble film material.

6. Adhesive tape (1; 1'; 1"; 1'''; 1'''') according to one of claims 4 or 5, **characterized in that** at least one of the adhesive layer (4), the bonding layer (12), and/or the adhesive coating (10) is covered by a liner (2), preferably **characterized in that** the liner (2) comprises a longitudinal cut (3).

7. Adhesive tape (1; 1'; 1"; 1''') according to one of claims 1 to 6, **characterized in that** the splittable carrier (9; 9'; 9"; 9''') is pre-opened along a first longitudinal edge (5), and/or **characterized in that** the splittable carrier (9; 9'; 9"; 9'''; 9"") is pre-opened along a second longitudinal edge (6).

8. Adhesive tape (1; 1'; 1"; 1''') according to one of claims 1 to 7, **characterized in that** the splittable carrier (9; 9'; 9"; 9''') has the same width as the splicing carrier (11).

9. Adhesive tape (1'; 1") according to claims 1 to 8 comprising at least two splittable carriers (9'; 9") which are each coated on one side with an adhesive layer (4) and on the other side with a bonding layer (12) and are attached to one side of the splicing carrier (11) so that a gap (13) with a gap width of less than 3 mm is formed between the two splittable carriers, or comprising one splittable carrier (9'; 9") which is coated on one side with an adhesive layer (4) and on the other side with a bonding layer (12) and is attached to one side of the splicing carrier (11), wherein a third pre-opened part (33) is created by making two cuts through the adhesive layer (4) and halfway through the splittable carrier (9'; 9") so as to yield a central strip and then removing the strip.

10. Adhesive tape (1'; 1"; 1'''') according to claims 1 to 7 and 9, **characterized in that** the width of the splittable carrier (9'; 9"; 9"") is smaller than the width of the splicing carrier (11).

11. Adhesive tape (1; 1'; 1"; 1'''; 1'''') according to one of claims 1 to 10 further comprising cuts perpendicular to its longitudinal direction (L).

12. Adhesive tape according to claims 1 to 11, **characterized in that** the splittable carrier is laminated with a detectable layer, or **characterized in that** the splittable carrier is deposited with a detectable layer; preferably **characterized in that** the detectable layer serves as splicing carrier as well as detectable layer.

13. Adhesive tape according to claim 12, **characterized in that** the detectable layer provides the tensile strength needed to work in the application.

14. Method for producing an adhesive tape (1) according to claims 1 to 13 comprising the following steps:
- Providing a first tape (21) comprising at least one splittable carrier which is coated on one side with an adhesive layer and on the other side with a bonding layer, wherein at least one of the adhesive layer and/or the bonding layer is covered with a protective layer;
- Cutting into the protective layer, into the adhesive layer contacting the protecting layer, and into the splittable carrier to a specific depth to produce cutout parts,
- Removing the cutout parts of the splittable carrier, the adhesive layer contacting the protective layers, and the protective layer, thereby producing a splittable carrier which is in parts pre-opened.

15. Method according to claim 14, further comprising the following steps:
- Providing a second tape comprising a splicing carrier which is coated on one side with an adhesive coating, the adhesive coating being covered by liner;
- Laminating the first tape (21) to the second tape (18).

16. Method according to claim 14 or 15, **characterized in that** the liner (2) of the second tape (18) is cut in its longitudinal direction (L).

17. Method according to claims 14 to 16, **characterized in that** the protective layer of the first tape (21) is removed from the cutout parts of the first tape (21), a removal carrier (25) is laminated to the cutout parts, and the removal carrier (25) with the cutout parts laminated thereon is removed from the first tape (21).
